# EUROPÄISCHE PATENTSCHRIFT

(11) **EP 4 345 266 B1**
(45) Veröffentlichungstag und Bekanntmachung des Hinweises auf die Patenterteilung: **03.06.2026**
(21) Anmeldenummer: 23199771.9
(22) Anmeldetag: 26.09.2023
(51) Int. Cl.: F02C 3/067, F02C 7/268, F02C 7/275, F02C 7/32, F02C 7/36

(54) **VORRICHTUNG ZUM ERZEUGEN VON ELEKTRISCHER ENERGIE FÜR EIN LUFTFAHRZEUG UND LUFTFAHRZEUG**
DEVICE FOR GENERATING ELECTRICAL ENERGY FOR AN AIRCRAFT AND AIRCRAFT
DISPOSITIF DE PRODUCTION D'ÉNERGIE ÉLECTRIQUE POUR UN AÉRONEF ET AÉRONEF

(30) Priorität: 28.09.2022 DE 102022124926
(43) Veröffentlichungstag der Anmeldung: 03.04.2024
(73) Patentinhaber: Rolls-Royce Deutschland Ltd & Co KG, 15827 Blankenfelde-Mahlow (DE); Rolls-Royce plc, London N1 9FX (GB)
(72) Erfinder: SEYDEL, Christian, 15827 Blankenfelde-Mahlow (DE); VENTER, Gideon Daniel, 15827 Blankenfelde-Mahlow (DE); KOPP, Sebastian, 15827 Blankenfelde-Mahlow (DE); MOUNTAIN, Stephen, London, N1 9FX (GB)

(56) Entgegenhaltungen:
- US-A1- 2008 184 694
- US-A1- 2013 219 907
- US-A1- 2021 362 862
- US-A1- 2022 136 402

## Beschreibung

Die vorliegende Offenbarung betrifft eine Vorrichtung zum Erzeugen von elektrischer Energie für ein Luftfahrzeug sowie ein Luftfahrzeug mit einer solchen Vorrichtung.

In der jüngeren Vergangenheit wurde versucht bisherige bekannte Transportsysteme, deren Antriebe im Betrieb fossile Brennstoffe in mechanische Energie wandeln, zunehmend durch umweltfreundlichere Systeme zu ersetzen. Dies gilt sowohl für Landfahrzeuge als auch für Luftfahrzeuge, für die ebenfalls geeignete umweltverträgliche Antriebstechnologien entwickelt werden.

Neben den rein elektrischen Antrieben stellen auch hybride Antriebssysteme effiziente Flugantriebssysteme dar, die gegenüber aktuellen Antriebssystemen deutlich weniger Schadstoffe emittieren und Brennstoffressourcen schonen. Aufgrund des derzeitig ungünstigen Verhältnisses zwischen Gewicht und Energieinhalt bei Traktionsbatterien ist jedoch die rein elektrische Flugweise nur für einen sehr kleinen Anwendungsbereich interessant. Elektroluftfahrzeuge werden daher derzeit mit zusätzlichen Energiewandlern und Speichern ausgestattet, um akzeptable Reichweiten und Antriebsleistungen bei gleichzeitig moderaten Kosten zu erzielen.

Als zukunftsfähiges Antriebskonzept wird u.a. das hybride elektrische Antriebssystem mit Kleinenergieerzeugern zur Reichweitenverlängerung angesehen. Für den Einsatz als Range-Extender stehen unterschiedliche Konzepte zur Verfügung, die eine Umwandlung von chemischer in elektrische Energie ermöglichen. Die Spezifikation eines Range-Extenders hängt dabei sehr stark von den Anforderungen an zukünftige Antriebskonzepte ab. Das bedeutet, dass Einbauraum, Gewicht, Kosten und Vielstofftauglichkeit eine neu zu definierende Gewichtung im Auswahlprozess des Energiewandlers erhalten.

Die Entwicklung und Applikation alternativer Energieumwandlungskonzepte werden derzeit als zielführend angesehen, um beispielsweise die Reichweite elektrisch angetriebener Kleinflugzeuge zu verbessern. Derzeit bekannte Konzepte umfassen Vorrichtungen, die aus einer Kombination aus einem Generator und aus einer den Generator antreibenden Gasturbine bestehen.

Die bekannten Vorrichtungen weisen jedoch einen hohen Bauraumbedarf sowie eine geringe Leistungsdichte auf, was sich auch ungünstig auf einen Energieverbrauch eines damit ausgeführten Luftfahrzeuges auswirkt. Vorrichtungen, die teilweise die Merkmale der vorliegenden Gegenstände aufweisen sind aus der US 2022/136402 A1, der US 2008/184694 A1, und der US 2013/219907 A1 bekannt.

Der vorliegenden Offenbarung liegt die Aufgabe zugrunde, eine bauraumgünstige und eine hohe Leistungsdichte aufweisende Vorrichtung zum Erzeugen von elektrischer Energie für ein Luftfahrzeug sowie ein Luftfahrzeug, das einen möglichst geringen Energieverbrauch aufweist, zur Verfügung zu stellen.

Diese Aufgabe wird mit einer Vorrichtung und mit einem Luftfahrzeug mit den Merkmalen des Patentanspruches 1 bzw. 6 gelöst.

Gemäß einem ersten Aspekt wird eine Vorrichtung zum Erzeugen von elektrischer Energie für ein Luftfahrzeug vorgeschlagen, die eine elektrischen Maschine und eine Gasturbineneinrichtung umfasst. Die Gasturbineneinrichtung ist mit einer Verdichtereinheit mit einer Brennkammereinheit und mit einer Turbineneinheit ausgeführt, die mit wenigstens einer Hochdruckturbine und mit einer Niederdruckturbine ausgebildet ist.

Die Verdichtereinheit ist über eine Hochdruckwelle mit der Hochdruckturbine gekoppelt, während die Niederdruckturbine über eine Niederdruckwelle direkt mit einer Ausgangswelle der elektrischen Maschine verbunden ist. Die Hochdruckwelle, die Niederdruckwelle und die Ausgangswelle der elektrischen Maschine sind auf bauraumgünstige Art und Weise koaxial zueinander angeordnet. Im Betrieb der Gasturbineneinrichtung rotieren die Hochdruckwelle und die die Niederdruckwelle mit unterschiedlicher Drehrichtung. Die elektrische Maschine ist zum Erzeugen von elektrischer Energie generatorisch und zum Starten der Gasturbineneinrichtung motorisch betreibbar, womit die Vorrichtung gemäß der vorliegenden Offenbarung auf einfache sowie bauraum- und kostengünstige Art und Weise ohne eine zusätzliche Startereinheit ausführbar ist. Damit weist die Vorrichtung im Vergleich zu bekannten Vorrichtungen eine höhere Leistungsdichte auf.

Zusätzlich steht die Ausgangswelle über eine Getriebeeinheit und einen Freilauf mit der Hochdruckwelle in Verbindung. Der Freilauf trennt die Verbindung zwischen der Ausgangswelle der elektrischen Maschine und der Hochdruckwelle bei Vorliegen eines Drehmomentflusses von der Hochdruckwelle in Richtung der Ausgangswelle.

Damit ist die für den Antrieb der Hochdruckwelle durch die elektrische Maschine erforderliche Drehrichtungsumkehr im Bereich des Getriebes mit geringem konstruktivem Aufwand darstellbar. Zusätzlich bietet der Freilauf ohne zusätzlichen Steuer- und Regelaufwand die Möglichkeit, dass die Wirkverbindung zwischen der elektrischen Maschine und der Hochdruckwelle im zugeschalteten Zustand der Gasturbineneinrichtung, in dem die Hochdruckwelle mit höherer Drehzahl als die Niederdruckwelle umläuft, im Bereich des Freilaufes unterbrochen wird. Dann ist die elektrische Maschine von der damit über die Niederdruckwelle verbundenen Niederdruckturbine antreibbar und kann im generatorischen Betrieb in gewünschtem Umfang elektrische Energie erzeugen, ohne dabei den Betrieb der Hochdruckturbine in unerwünschter Art und Weise zu beeinflussen.

Die Getriebeeinheit umfasst eine erste Stirnradstufe mit einem ersten Stirnrad, das mit der Ausgangswelle verbunden ist und mit einem zweiten Stirnrad kämmt. Das zweite Stirnrad ist drehfest mit einer Welle verbunden, die mit einer ersten Kupplungshälfte des Freilaufes gekoppelt ist.

Die Getriebeeinheit weist eine zweite Stirnradstufe und eine dritte Stirnradstufe auf. Ein erstes Stirnrad der zweiten Stirnradstufe ist auf einer Welle angeordnet, die mit einer zweiten Kupplungshälfte des Freilaufes drehfest verbunden ist.

Ein zweites Stirnrad der zweiten Stirnradstufe kann auf konstruktiv einfache und kostengünstige Art und Weise über eine Welle mit einem ersten Stirnrad der dritten Stirnradstufe drehfest verbunden sein, das mit einem drehfest mit der Hochdruckwelle in Wirkverbindung stehenden zweiten Stirnrad der dritten Stirnradstufe kämmt.

Wenn mit dem ersten Stirnrad der zweiten Stirnradstufe ein weiteres als Stirnrad ausgeführtes Zahnrad einer Hilfsgerätegetriebeeinrichtung kämmt, dann ist die Hilfsgerätegetriebeeinrichtung während des Startvorganges der Gasturbineneinrichtung von der motorisch betrieben elektrischen Maschine und in zugeschaltetem Betriebszustand der Gasturbineneinrichtung über die Hochdruckwelle von der Hochdruckturbine antreibbar.

Bei einer weiteren Ausführungsform der Vorrichtung gemäß der vorliegenden Offenbarung, die eine hohe Leistungsdichte aufweist, steht mit dem Zahnrad der Hilfsgerätegetriebeeinrichtung ein Stirnrad der Hilfsgerätegetriebeeinrichtung in Eingriff, über das wenigstens ein Hilfsaggregat antreibbar ist.

Die Getriebeeinheit ist bei einer in radialer Richtung durch einen geringen Bauraumbedarf gekennzeichneten Ausführungsform der Vorrichtung gemäß der vorliegenden Offenbarung in axialer Richtung der Ausgangswelle zwischen der elektrischen Maschine und der Verdichtereinheit angeordnet.

Des Weiteren wird ein Luftfahrzeug beschrieben, das mit einer in der vorstehend näher beschriebenen Art und Weise ausgebildeten Vorrichtung ausgeführt ist und daher mit geringem Energieeinsatz bei gleichzeitig hoher Reichweite betreibbar ist.

Für den Fachmann ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen. Des Weiteren kann ein beliebiges Merkmal oder ein beliebiger Parameter, das bzw. der hier beschrieben wird, bei einem beliebigen Aspekt angewendet werden und/oder mit einem beliebigen anderen Merkmal oder Parameter, das bzw. der hier beschrieben wird, kombiniert werden, sofern sie sich nicht gegenseitig ausschließen. Hierbei ist allerdings zu berücksichtigen, dass der Gegenstand der beanspruchten Erfindung in den angehängten Patentansprüchen definiert wird.

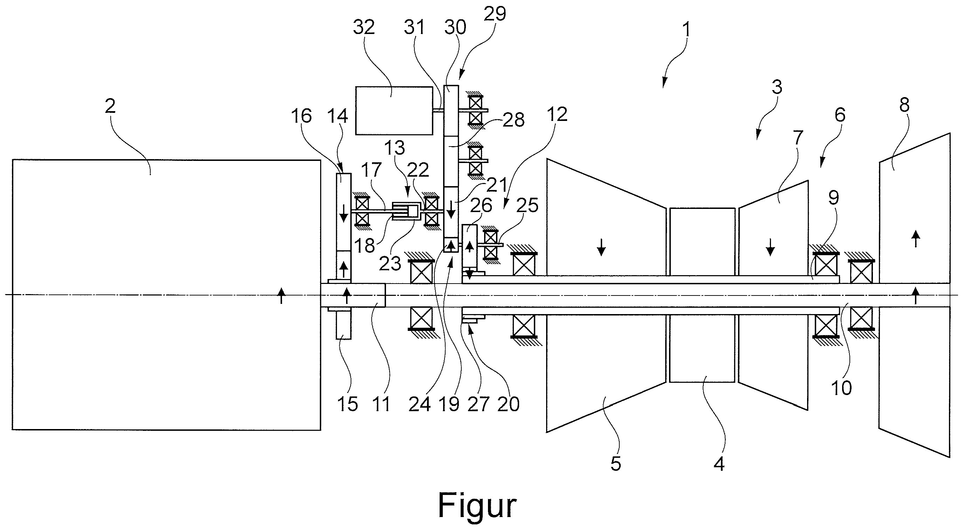

Die vorliegende Offenbarung ist nicht auf die angegebenen Kombinationen der Merkmale der nebengeordneten Ansprüche oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung von Ausführungsformen und unmittelbar aus der Zeichnung hervorgehen, miteinander zu kombinieren. Wie im vorherigen Absatz ist hierbei zu berücksichtigen, dass der Gegenstand der beanspruchten Erfindung in den angehängten Patentansprüchen definiert wird.

Die Bezugnahme der Ansprüche auf die Zeichnungen durch die Verwendung von Bezugszeichen soll den Schutzumfang der Ansprüche nicht beschränken.

Bevorzugte Weiterbildungen ergeben sich aus den Unteransprüchen und der nachfolgenden Beschreibung. Ausführungsbeispiele des Gegenstandes gemäß der vorliegenden Offenbarung werden, ohne hierauf beschränkt zu sein, anhand der Zeichnung näher erläutert.

Die einzige Figur der Zeichnung zeigt eine stark schematisierte Längsschnittansicht einer Vorrichtung für ein Luftfahrzeug zum Erzeugen von elektrischer Energie, wobei die Vorrichtung eine motorisch und generatorisch betreibbare elektrischen Maschine und eine damit gekoppelte Gasturbineneinrichtung umfasst.

In der Figur ist eine Vorrichtung 1 zum Erzeugen von elektrischer Energie für ein nicht näher dargestelltes Luftfahrzeug mit einer elektrischen Maschine 2 und mit einer damit wirkverbundenen Gasturbineneinrichtung 3 in einer stark vereinfachten Längsschnittansicht gezeigt. Die Gasturbineneinrichtung 3 ist mit einer Brennkammereinheit 4, mit einer Verdichtereinheit 5 und mit einer Turbineneinheit 6 ausgeführt, die eine Hochdruckturbine 7 und eine Niederdruckturbine 8 umfasst. Im Bereich der Verdichtereinheit 5 wird Luft verdichtet und in die Brennkammereinheit 4 eingeleitet, in der der verdichteten Luft Brennstoff zugeführt wird. In der Brennkammereinheit 4 wird das Brennstoff-Luft-Gemisch entzündet. Die durch die Verbrennung erhitzte Luft tritt in Richtung der Hochdruckturbine 7 aus, entspannt dort und treibt die Hochdruckturbine 7 an. Im Anschluss daran strömt die Luft durch die Niederdruckturbine 8 und treibt diese dabei an.

Die Verdichtereinheit 5 ist über eine Hochdruckwelle 9 mit der Hochdruckturbine 7 gekoppelt und wird somit von dieser im Betrieb der Gasturbineneinrichtung 3 angetrieben. Die Niederdruckturbine 8 ist über eine Niederdruckwelle 10 direkt mit einer Ausgangswelle 11 der elektrischen Maschine 2 verbunden und treibt damit in zugeschaltetem Zustand der Gasturbineneinrichtung 3 die elektrische Maschine 2 an. Die elektrische Maschine 2 erzeugt im generatorischen Betrieb elektrische Energie und versorgt einen elektrischen Flugantrieb eines Luftfahrzeuges mit elektrischer Energie und beaufschlagt vorzugsweise zusätzlich auch ein Bordnetz sowie eine elektrische Speichereinheit des Luftfahrzeuges mit elektrischer Energie.

Die Hochdruckwelle 9, die Niederdruckwelle 10 und die Ausgangswelle 11 der elektrischen Maschine 2 sind koaxial zueinander angeordnet. Dabei rotieren die Hochdruckwelle 9 und die die Niederdruckwelle 10 im Betrieb der Gasturbineneinrichtung 3 mit unterschiedlicher Drehrichtung, weshalb die Turbineneinheit mit hohem Wirkungsgrad betreibbar ist.

Die elektrische Maschine 3 ist zum Starten der Gasturbineneinrichtung 3 auch motorisch betreibbar. Zum Starten der Gasturbineneinrichtung 3 steht die Ausgangswelle 11 über eine Getriebeeinheit 12 und einen Freilauf 13 mit der Hochdruckwelle 9 in Verbindung. Die Getriebeeinheit 12 ist in axialer Richtung der Ausgangswelle 11 zwischen der elektrischen Maschine 2 und der Verdichtereinheit 5 angeordnet. Der Freilauf 13 trennt die Verbindung zwischen der Ausgangswelle 11 der elektrischen Maschine 2 und der Hochdruckwelle 9 bei Vorliegen eines Drehmomentflusses von der Hochdruckwelle 9 in Richtung der Ausgangswelle 11.

Die Getriebeeinheit 12 umfasst eine erste Stirnradstufe 14, die ein erstes Stirnrad 15 aufweist, das mit der Ausgangswelle 11 verbunden ist und mit einem zweiten Stirnrad 16 der ersten Stirnradstufe 14 kämmt. Das zweite Stirnrad 16 der ersten Stirnradstufe 14 ist drehfest mit einer Welle 17 verbunden, die mit einer ersten Kupplungshälfte 18 des Freilaufes 13 gekoppelt ist. Die Getriebeeinheit 12 weist darüber hinaus eine zweite Stirnradstufe 19 und eine dritte Stirnradstufe 20 auf. Ein erstes Stirnrad 21 der zweiten Stirnradstufe 19 ist auf einer Welle 22 angeordnet, die mit einer zweiten Kupplungshälfte 23 des Freilaufes 13 drehfest verbunden ist.

Ein zweites Stirnrad 24 der zweiten Stirnradstufe 19 ist über eine Welle 25 mit einem ersten Stirnrad 26 der dritten Stirnradstufe 20 drehfest verbunden, das mit einem drehfest mit der Hochdruckwelle 7 in Wirkverbindung stehenden zweiten Stirnrad 27 der dritten Stirnradstufe 20 kämmt.

Zusätzlich kämmt mit dem ersten Stirnrad 21 der zweiten Stirnradstufe 19 ein weiteres als Stirnrad ausgeführtes Zahnrad 28 einer Hilfsgerätegetriebeeinrichtung 29. Mit dem Zahnrad 28 der Hilfsgerätegetriebeeinrichtung 29 steht ein Stirnrad 30 der Hilfsgerätegetriebeeinrichtung 29 in Eingriff, das drehfest auf einer Welle 31 eines Hilfsaggregates 32 angeordnet ist, über die das Hilfsaggregat 32 von der Hochdruckwelle 9 antreibbar ist. Das Hilfsaggregat 32 kann beispielsweise als Brennstoffpumpe, Hydraulikpumpe oder dergleichen ausgebildet sein.

### Bezugszeichenliste

- 1: Vorrichtung
- 2: elektrische Maschine
- 3: Gasturbineneinrichtung
- 4: Brennkammereinheit
- 5: Verdichtereinheit
- 6: Turbineneinheit
- 7: Hochdruckturbine
- 8: Niederdruckturbine
- 9: Hochdruckwelle
- 10: Niederdruckwelle
- 11: Ausgangswelle
- 12: Getriebeeinheit
- 13: Freilauf
- 14: erste Stirnradstufe des Getriebes
- 15: erstes Stirnrad der ersten Stirnradstufe
- 16: zweites Stirnrad der ersten Stirnradstufe
- 17: Welle zwischen dem zweitem Stirnrad der ersten Stirnradstufe und der ersten Kupplungshälfte des Freilaufes
- 18: erste Kupplungshälfte des Freilaufes
- 19: zweite Stirnradstufe des der Getriebeeinheit
- 20: dritte Stirnradstufe des Getriebes
- 21: erstes Stirnrad der zweiten Stirnradstufe
- 22: Welle zwischen dem ersten Stirnrad der zweiten Stirnradstufe und der zweiten Kupplungshälfte des Freilaufes
- 23: zweite Kupplungshälfte des Freilaufes
- 24: zweites Stirnrad der zweiten Stirnradstufe
- 25: Welle zwischen dem zweiten Stirnrad der zweiten Stirnradstufe und dem Stirnrad 26 der dritten Stirnradstufe
- 26: erstes Stirnrad der dritten Stirnradstufe
- 27: zweites Stirnrad der dritten Stirnradstufe
- 28: Zahnrad
- 29: Hilfsgerätegetriebeeinrichtung
- 30: Stirnrad der Hilfsgerätegetriebeeinrichtung
- 31: Welle des Hilfsaggregates
- 32: Hilfsaggregat

## Patentansprüche

1. Vorrichtung (1) zum Erzeugen von elektrischer Energie für ein Luftfahrzeug mit einer elektrischen Maschine (2) und mit einer Gasturbineneinrichtung (3) mit einer Verdichtereinheit (5), mit einer Turbineneinheit (6) mit wenigstens einer Hochdruckturbine (9) und mit einer Niederdruckturbine (8) und mit einer Brennkammereinheit (4),
wobei die Verdichtereinheit (5) über eine Hochdruckwelle (9) mit der Hochdruckturbine (7) gekoppelt ist,
wobei die Niederdruckturbine (8) über eine Niederdruckwelle (10) direkt mit einer Ausgangswelle (11) der elektrischen Maschine (2) verbunden ist,
wobei die Hochdruckwelle (9), die Niederdruckwelle (10) und die Ausgangswelle (11) der elektrischen Maschine (11) koaxial zueinander angeordnet sind, wobei die Hochdruckwelle (9) und die Niederdruckwelle (10) im Betrieb der Gasturbineneinrichtung (3) mit unterschiedlicher Drehrichtung rotieren, wobei die elektrische Maschine (2) generatorisch zum Erzeugen von elektrischer Energie betreibbar ist,
wobei die elektrische Maschine (2) zum Starten der Gasturbineneinrichtung (3) motorisch betreibbar ist und die Ausgangswelle (11) über eine Getriebeeinheit (12) und einen Freilauf (13) mit der Hochdruckwelle (9) in Verbindung steht,
wobei der Freilauf (13) die Verbindung zwischen der Ausgangswelle (11) der elektrischen Maschine (2) und der Hochdruckwelle (9) bei Vorliegen eines Drehmomentflusses von der Hochdruckwelle (9) in Richtung der Ausgangswelle (11) trennt,
wobei die Getriebeeinheit (12) eine erste Stirnradstufe (14) umfasst, die ein erstes Stirnrad (15) aufweist, das mit der Ausgangswelle (11) drehfest verbunden ist und mit einem zweiten Stirnrad (16) der ersten Stirnradstufe (14) kämmt, das drehfest mit einer Welle (17) verbunden ist, die mit einer ersten Kupplungshälfte (18) des Freilaufes (13) gekoppelt ist,
und wobei die Getriebeeinheit (12) eine zweite Stirnradstufe (19) und eine dritte Stirnradstufe (20) aufweist, wobei ein erstes Stirnrad (21) der zweiten Stirnradstufe (19) drehfest auf einer Welle (22) angeordnet ist, die mit einer zweiten Kupplungshälfte (23) des Freilaufes (13) drehfest verbunden ist.

2. Vorrichtung nach Anspruch 1, **dadurch gekennzeichnet, dass** ein zweites Stirnrad (24) der zweiten Stirnradstufe (19) über eine Welle (25) mit einem ersten Stirnrad (26) der dritten Stirnradstufe (20) drehfest verbunden ist, das mit einem drehfest mit der Hochdruckwelle (9) in Wirkverbindung stehenden zweiten Stirnrad (27) der dritten Stirnradstufe (20) kämmt.

3. Vorrichtung nach Anspruch 1 oder 2, **dadurch gekennzeichnet, dass** mit dem ersten Stirnrad (21) der zweiten Stirnradstufe (19) ein weiteres als Stirnrad ausgeführtes Zahnrad (28) einer Hilfsgerätegetriebeeinrichtung (29) kämmt.

4. Vorrichtung nach Anspruch 3, **dadurch gekennzeichnet, dass** mit dem Zahnrad (28) der Hilfsgerätegetriebeeinrichtung (29) ein Stirnrad (30) der Hilfsgerätegetriebeeinrichtung (29) in Eingriff steht, das drehfest auf einer Welle (31) eines Hilfsaggregates (32) angeordnet ist, über die das Hilfsaggregat (32) von der Hochdruckwelle (9) antreibbar ist.

5. Vorrichtung nach wenigstens einem der vorstehenden Ansprüche, **dadurch gekennzeichnet, dass** die Getriebeeinheit (12) in axialer Richtung der Ausgangswelle (11) zwischen der elektrischen Maschine (2) und der Verdichtereinheit (5) angeordnet ist.

6. Luftfahrzeug mit einer Vorrichtung gemäß einem der Ansprüche 1 bis 5.

## Claims

1. Device (1) for generating electrical energy for an aircraft with an electrical machine (2) and with a gas turbine device (3) with a compressor unit (5), with a turbine unit (6) with at least one high-pressure turbine (9) and with a low-pressure turbine (8) and with a combustion chamber unit (4), wherein the compressor unit (5) is coupled to the high-pressure turbine (7) via a high-pressure shaft (9), wherein the low-pressure turbine (8) is connected directly to an output shaft (11) of the electrical machine (2) via a low-pressure shaft (10), wherein the high-pressure shaft (9), the low-pressure shaft (10) and the output shaft (11) of the electrical machine (11) are arranged coaxially with respect to one another, wherein the high-pressure shaft (9) and the low-pressure shaft (10) rotate in different directions of rotation during operation of the gas turbine device (3), wherein the electrical machine (2) is operable by a generator to generate electrical energy, wherein the electrical machine (2) is operable by a motor to start the gas turbine device (3) and the output shaft (11) is connected to the high-pressure shaft (9) via a gear unit (12) and a freewheel (13), wherein the freewheel (13) separates the connection between the output shaft (11) of the electrical machine (2) and the high-pressure shaft (9) in the presence of a torque flow from the high-pressure shaft (9) in the direction of the output shaft (11), wherein the gear unit (12) comprises a first spur gear stage (14), which has a first spur gear (15), which is connected in a rotationally fixed manner to the output shaft (11) and meshes with a second spur gear (16) of the first spur gear stage (14), which is connected in a rotationally fixed manner to a shaft (17), which is coupled to a first coupling half (18) of the freewheel (13),
and wherein the gear unit (12) has a second spur gear stage (19) and a third spur gear stage (20), wherein a first spur gear (21) of the second spur gear stage (19) is arranged in a rotationally fixed manner on a shaft (22) that is connected in a rotationally fixed manner to a second coupling half (23) of the freewheel (13).

2. Device according to claim 1, **characterised in that** a second spur gear (24) of the second spur gear stage (19) is connected in a rotationally fixed manner via a shaft (25) to a first spur gear (26) of the third spur gear stage (20), which meshes with a second spur gear (27) of the third spur gear stage (20), which is operatively connected to the high-pressure shaft (9) in a rotationally fixed manner.

3. Device according to claim 1 or 2, **characterised in that** a further gearwheel (28), designed as a spur gear, of an auxiliary device gear mechanism (29) meshes with the first spur gear (21) of the second spur gear stage (19).

4. Device according to claim 3, **characterised in that** a spur gear (30) of the auxiliary device gear mechanism (29) is in engagement with the gearwheel (28) of the auxiliary device gear mechanism (29) and is arranged in a rotationally fixed manner on a shaft (31) of an auxiliary unit (32), via which the auxiliary unit (32) can be driven by the high-pressure shaft (9).

5. Device according to at least one of the preceding claims, **characterised in that** the gear unit (12) is arranged in the axial direction of the output shaft (11) between the electrical machine (2) and the compressor unit (5).

6. Aircraft with a device according to any of claims 1 to 5.

## Revendications

1. Dispositif (1) de production d'énergie électrique pour un aéronef avec une machine électrique (2) et un dispositif à turbine à gaz (3) avec une unité de compresseur (5), avec une unité de turbine (6) avec au moins une turbine haute pression (9) et avec une turbine basse pression (8) et avec une unité de chambre de combustion (4),
l'unité de compresseur (5) étant couplée à la turbine haute pression (7) par l'intermédiaire d'un arbre haute pression (9), la turbine basse pression (8) étant reliée directement, par l'intermédiaire d'un arbre basse pression (10), à un arbre de sortie (11) de la machine électrique (2), l'arbre haute pression (9), l'arbre basse pression (10) et l'arbre de sortie (11) de la machine électrique (11) étant disposés coaxialement les uns par rapport aux autres, l'arbre haute pression (9) et l'arbre basse pression (10) tournant dans des sens de rotation différents lors du fonctionnement du dispositif à turbine à gaz (3), dans lequel la machine électrique (2) peut être exploitée en mode générateur pour produire de l'énergie électrique, la machine électrique (2) peut être exploitée en mode moteur pour le démarrage du dispositif à turbine à gaz (3) et l'arbre de sortie (11) est relié à l'arbre haute pression (9) par l'intermédiaire d'une unité d'engrenage (12) et d'une roue libre (13), la roue libre (13) interrompant la liaison entre l'arbre de sortie (11) de la machine électrique (2) et l'arbre haute pression (9) en présence d'un flux de couple allant de l'arbre haute pression (9) en direction de l'arbre de sortie (11), l'unité d'engrenage (12) comprenant un premier étage d'engrenages droits (14) qui comporte un premier engrenage droit (15) qui est relié de manière solidaire en rotation à l'arbre de sortie (11) et qui engrène avec un second engrenage droit (16) du premier étage d'engrenages droits (14) qui est relié de manière solidaire en rotation à un arbre (17) qui est couplé à une première moitié d'accouplement (18) de la roue libre (13),
et dans lequel l'unité d'engrenage (12) comporte un deuxième étage d'engrenages droits (19) et un troisième étage d'engrenages droits (20), un premier engrenage droit (21) du deuxième étage d'engrenages droits (19) étant disposé de manière solidaire en rotation sur un arbre (22) qui est relié de manière solidaire en rotation à une seconde moitié d'accouplement (23) de la roue libre (13).

2. Dispositif selon la revendication 1, **caractérisé en ce qu'**un second engrenage droit (24) du deuxième étage d'engrenages droits (19) est relié de manière solidaire en rotation, par l'intermédiaire d'un arbre (25), à un premier engrenage droit (26) du troisième étage d'engrenages droits (20), lequel engrène avec un second engrenage droit (27) du troisième étage d'engrenages droits (20), en liaison opérative et de manière solidaire en rotation avec l'arbre haute pression (9).

3. Dispositif selon l'une des revendications 1 ou 2, **caractérisé en ce qu'**un autre engrenage (28), réalisé sous forme d'engrenage droit, d'un dispositif d'engrenage d'auxiliaires (29) engrène avec le premier engrenage droit (21) du deuxième étage d'engrenages droits (19).

4. Dispositif selon la revendication 3, **caractérisé en ce qu'**un engrenage droit (30) du dispositif d'engrenage d'auxiliaires (29) est en prise avec l'engrenage (28) du dispositif d'engrenage d'auxiliaires (29), ledit engrenage droit étant disposé de manière solidaire en rotation sur un arbre (31) d'un auxiliaire (32), par l'intermédiaire duquel l'auxiliaire (32) peut être entraîné par l'arbre haute pression (9).

5. Dispositif selon au moins l'une quelconque des revendications précédentes, **caractérisé en ce que** l'unité d'engrenage (12) est disposée, dans la direction axiale de l'arbre de sortie (11), entre la machine électrique (2) et l'unité de compresseur (5).

6. Aéronef comportant un dispositif selon l'une quelconque des revendications 1 à 5.
